# EUROPÄISCHE PATENTSCHRIFT

(11) **EP 3 382 842 B1**
(45) Veröffentlichungstag und Bekanntmachung des Hinweises auf die Patenterteilung: **13.05.2020**
(21) Anmeldenummer: 18164170.5
(22) Anmeldetag: 27.03.2018
(51) Int. Cl.: H02J 3/38, H01F 38/08, H01F 30/12

(54) **WINDENERGIEANLAGE MIT KURZSCHLUSSSTROMVERBESSERTEM ANLAGENTRANSFORMATOR**
WIND TURBINE WITH INSTALLATION TRANSFORMER WITH IMPROVED SHORT CIRCUIT CURRENT
ÉOLIENNE DOTÉE DU TRANSFORMATEUR D'INSTALLATION À COURANT DE COURT-CIRCUIT RENFORCÉ

(30) Priorität: 30.03.2017 DE 102017003077
(43) Veröffentlichungstag der Anmeldung: 03.10.2018
(73) Patentinhaber: Senvion GmbH, 22297 Hamburg (DE)
(72) Erfinder: Letas, Heinz-Hermann, 24796 Bovenau (DE)
(74) Vertreter: Glawe, Delfs, Moll

(56) Entgegenhaltungen:
- WO-A1-2007/003183
- WO-A2-2006/047730
- CN-A- 102 064 005
- CN-B- 103 337 344
- DE-A1-102008 018 748
- DE-A1-102010 034 905
- US-A- 2 047 845

## Beschreibung

Die Erfindung betrifft eine Windenergieanlage umfassend einen Windrotor, einen vom Windrotor angetriebenen Generator mit Umrichter zur Erzeugung elektrischer Leistung, und einen über eine Verbindungsleitung angeschlossenen Anlagentransformator zur Abgabe der Leistung in das Netz. Der Anlagentransformator weist mindestens einen Phasenstrang auf, wobei für jeden Phasenstrang ein aus Oberspannungswicklung und Unterspannungswicklung bestehendes Wicklungspaar vorgesehen ist.

Bei Windenergieanlagen mit hoher Leistung ist deren Verhalten gegenüber dem Netz von besonderer Wichtigkeit. So gehört es zu den geforderten Eigenschaften, dass die Windenergieanlagen kurzschlussfest sein müssen. Bei einem Kurzschluss muss ein bestimmter Kurzschlussstrom gegenüber dem Netz eingehalten werden. Maßgebend für den Kurzschlussstrom ist hauptsächlich der Anlagentransformator der Windenergieanlage.

Die internationale Patentanmeldung WO 2007/003183 A1 offenbart eine Windenergieanlage mit einem Windrotor, einem vom Windrotor angetriebenen Generator mit Umrichter zur Leistungserzeugung. Der Umrichter ist wiederum an einen Transformator angeschlossen, über den die Abgabe der erzeugten Leistung in ein Netz erfolgt. WO 2007/003183 A1 offenbart diverse Ausgestaltungsmöglichkeiten für den an das Netz angeschlossenen Transformator, die alle gemein haben, dass sie mindestens ein aus Unterspannungswicklung und Oberspannungswicklung bestehendes Wicklungspaar für jeden Phasenstrang aufweisen.

Es ist bekannt, zur Erhöhung der übertragbaren Leistung oder aus Redundanzgründen eine Windenergieanlage über zwei parallel geschaltete Anlagentransformatoren anzuschließen. Damit kann auch eine Beschränkung des Kurzschlussstroms erreicht werden. Allerdings ist es ausgesprochen aufwendig, zwei gesonderte Transformatoren vorzusehen. Dies gilt sowohl im Hinblick auf die Herstellungskosten wie auch im Hinblick auf weitere Anforderungen, insbesondere hinsichtlich Bauraum, da derartige Anlagentransformatoren eine beträchtliche Größe aufweisen, die insbesondere bestimmt ist durch den verhältnismäßig großen und schweren Kern des Transformators.

Der Erfindung liegt die Aufgabe zugrunde, das Kurzschlussverhalten der Windenergieanlage mit geringerem Aufwand zu verbessern.

Die erfindungsgemäße Lösung liegt in den Merkmalen des unabhängigen Anspruchs. Vorteilhafte Weiterbildungen sind Gegenstand der abhängigen Ansprüche.

Bei einer Windenergieanlage umfassend einen Windrotor, einen vom Windrotor angetriebenen Generator mit Umrichter zur Erzeugung elektrischer Leistung, und einen über eine Verbindungsleitung angeschlossenen Anlagentransformator mit mindestens einem Phasenstrang zur Abgabe der Leistung in ein Netz wobei der Anlagentransformator ein aus Unterspannungswicklung und Oberspannungswicklung bestehendes Wicklungspaar aufweist für jeden Phasenstrang, die eine erste Impedanz des Anlagentransformators bilden, ist erfindungsgemäß für jeden Phasenstrang mindestens ein zweites Wicklungspaar mit zweiter Unterspannungswicklung und zweiter Oberspannungswicklung vorgesehen, welches von dem ersten Wicklungspaar beabstandet angeordnet ist, und wobei jedes der Wicklungspaare im Streufeld des jeweils anderen Wicklungspaars angeordnet ist, wobei eine magnetische Kreuzkoppelung zwischen den Wicklungen des einen Wicklungspaares zu denen des anderen gebildet ist und wobei das erste und das zweite Wicklungspaar elektrisch parallel geschaltete Stränge für die Leistung bilden.

Die Erfindung beruht auf dem Gedanken, in dem Anlagentransformator anstatt der herkömmlichen zwei Wicklungen (für Unterspannung und Oberspannung), die für jede Phase jeweils ein Wicklungspaar bilden, vier Wicklungen vorzusehen, die in zwei Wicklungspaaren angeordnet sind (mit jeweils einer Wicklung für Unterspannung und Oberspannung). Die Wicklungen sind voneinander getrennt ausgeführt. Die beiden so gebildeten disjunkten Wicklungspaare sind an sich gleichartig aufgebaut und elektrisch parallel geschaltet. Sie bilden parallele Stränge für den Leistungsfluss. Die Erfindung sieht weiter vor, dass das zweite Wicklungspaar im Streufeld des ersten Wicklungspaars angeordnet ist, und umgekehrt. Auf diese Weise ergeben sich zusätzlich zu den zwei parallelen Leistungsflusssträngen noch zwei sich kreuzende Leistungsflussstränge, nämlich über das Streufeld. Hierbei ist eine der Wicklungen des ersten Wicklungspaares über das Streufeld gekoppelt mit einer der Wicklungen des zweiten Wicklungspaares, und umgekehrt. Da diese "Kreuz"-Koppelung lediglich über das Streufeld erfolgt, weist sie eine vergleichsweise hohe Impedanz auf. Die Impedanz der kreuzenden Stränge ist wesentlich höher als diejenige der parallelen Stränge. Dies führt dazu, dass im Normalbetrieb der Leistungsfluss durch die beiden parallelen Stränge, die eine vergleichsweise niedrige Impedanz aufweisen, geführt ist. Die kreuzweise verlaufenden Stränge spielen wegen ihrer im Vergleich hohen Impedanz keine Rolle für den Leistungsfluss; so wirken sich praktisch nicht aus. Damit stören sie im normalen Betrieb auch nicht.

Der Clou der Erfindung liegt nun darin, dass durch das im Streufeld angeordnete zusätzliche Wicklungspaar mit der so bewirkten kreuzweise Verkoppelung zum einen der Normalbetrieb nicht gestört wird, aber andererseits sich eine ausgesprochen positive Wirkung ergibt für den Fall eines Kurzschlusses. Im Fall eines Kurzschlusses, insbesondere eines Kurzschlusses in nur einem der parallelen Systeme, erfolgt der Leistungsfluss auch über die kreuzweise Koppelung. Wegen der hohen Impedanz aufgrund der Koppelung über das Streufeld erfolgt hierbei jedoch in gewünschter Weise nur eine verhältnismäßig geringfügige Zunahme des Kurzschlussstroms. Beträgt bspw. die Impedanz bei der Kreuzkoppelung über das Streufeld das 10fache der Impedanz, wie sie innerhalb eines Wicklungspaares zwischen Ober- und Unterspannungswicklung vorliegt, so erhöht sich der Kurzschlussstrom von 50% nur um lediglich 5% des Gesamtstroms durch die Kreuzkoppelung. Damit wird vermieden, dass der in dem von dem Kurzschluss betroffenen Pfad angeordnete Leistungsschalter eine wesentlich höhere Strombelastung erhält, als es seiner Auslegung entspricht. In dem vorstehend gewählten Beispiel mit zwei parallelen Systemen sind die Teile der parallelen Systeme nur für jeweils ca. 50% der Gesamtstrombelastung ausgelegt. Das bedeutet für den Leistungsschalter im Normalbetrieb eine Strombelastung von 50% des Gesamtstroms, welche bei einem Kurzschluss in einem der parallelen Systeme auf maximal 55% steigt. Dies ist ein erheblicher Fortschritt gegenüber der konventionellen Ausführung (ohne die erfindungsgemäße Kreuzkoppelung), bei der es zu einer vollen Stromübernahme von 100% durch den verbliebenen Leistungsschalter kommt, mit der daraus resultierenden Gefahr einer Überlastung.

Die Erfindung erreicht also eine wirksame Kurzschlussstromreduzierung, insbesondere in Bezug auf eine Vermeidung der Überlastung von Leistungsschaltern, und kommt dennoch mit einem Transformator aus. Dieser braucht lediglich ein zusätzliches Wicklungspaar pro Phase zu erhalten. Das ist mit erheblich geringerem Aufwand möglich als das Vorsehen eines vollständigen zweiten Transformators.

Zweckmäßigerweise sind die Wicklungspaare vorzugsweise durch eine Zwischenraum voneinander getrennt auf einem gemeinsamen Kern angeordnet. Damit ergibt sich eine raumsparende Anordnung und der Grad der Koppelung kann durch die Wahl des Abstands zwischen den beiden Wicklungspaaren und damit durch die Wahl der Größe des Streufelds leicht angepasst werden. Vorzugsweise sind die beiden Wicklungen (Unterspannungswicklung und Oberspannungswicklung) jedes Wicklungspaares so angeordnet, dass eine Wicklung des Paares umgeben ist von der anderen Wicklung des Paares. Typischerweise erfolgt dies dadurch, dass die zweitgenannte Wicklung auf die erstgenannte Wicklung aufgewickelt ist. Damit ergibt sich eine besonders niederimpedante Koppelung innerhalb des Wicklungspaares. Die Kreuzkoppelung zu dem anderen, getrennt angeordneten Wicklungspaar erfolgt dann nur über das Streufeld. Damit ergibt sich für die Kreuzkopplung eine wesentlich erhöhte Impedanz. Vorzugsweise ist hierbei das Impedanzverhältnis so eingestellt, dass die Impedanz bei der Kreuzkoppelung mindestens das 3fache, vorzugsweise mindestens das 10fache gegenüber der niedrigen Impedanz zwischen den beiden Wicklungen innerhalb eines Wicklungspaares beträgt.

Mit Vorteil sind die Leistungsschalter kleiner dimensioniert als es dem Gesamtkurzschlussstrom des Anlagentransformators entspricht, jedoch sind sie größer dimensioniert als es dem Kurzschlussstrom eines der Wicklungspaare und Aufbau als getrennten Transformators entspricht. Damit können von der Strombelastbarkeit her kleinere, und damit wesentlich kostengünstigere Leistungsschalter eingesetzt werden, und dank der Erfindung werden sie dennoch im Kurzschlussfall nicht überlastet.

Für die Bauform des Anlagentransformators hat sich besonders eine Kernbauform bewährt, wobei zwei durch Joche verbundene Schenkel mit Wicklungen vorgesehen sind. Hierbei ist vorzugsweise auf jedem der beiden Schenkel ein Wicklungspaar angeordnet. Hierbei sind die beiden Wicklungen des Wicklungspaars übereinander gewickelt, d. h. die eine der beiden ist außen auf die andere aufgewickelt. Damit erhält man eine sehr gute Koppelung innerhalb des Wicklungspaares, was in einer entsprechend niedrigen Impedanz resultiert. Durch den umlaufenden Kern ergibt sich eine immer noch gute Koppelung über das Streufeld, sodass auch die gewünschte geringe Koppelung auf diese Weise geschaffen ist. Es sei darauf hingewiesen, dass alternativ der Anlagentransformator auch in sogenannter Mantelbauweise ausgeführt sein kann, wobei die Wicklungen hier alle auf einem Schenkel in der Mitte angeordnet sind, und der magnetische Kreis geschlossen ist durch zwei jeweils an gegenüberliegenden Außenseiten angeordnete Schenkel halben Querschnitts, die jeweils keine Wicklungen tragen. Vorstehendes gilt in Bezug auf einen Einphasentransformator; für ein mehrphasiges System, insbesondere ein Drehstromsystem, gilt dies dann entsprechend.

Vorzugsweise ist bei einem Mehrphasensystem, insbesondere ein Drehstromsystem, der Anlagentransformator derart ausgebildet, dass er ein oder vorzugsweise mehrere (entsprechend der Zahl der Phasen im Mehrphasensystem) getrennte Kerne umfasst, wobei jeder Kern zwei durch Joche verbundene Schenkel mit Wicklungen aufweist. Jeder dieser Kerne ist mit den Wicklungen, wie vorstehend für die Kernbauform beschrieben, aufgebaut. Zweckmäßigerweise sind hierbei die Nullleiter der beiden Wicklungspaare zumindest unterspannungsseitig miteinander verbunden, also als gemeinsamer Nullleiter ausgeführt.

Die Erfindung wird nachfolgend unter Bezugnahme auf die beigefügte Zeichnung näher erläutert, in der ein vorteilhaftes Ausführungsbeispiel dargestellt ist. Es zeigen:
Fig. 1: eine schematische Ansicht einer Windenergieanlage gemäß einem Ausführungsbeispiel der Erfindung;
Fig. 2: eine Detailansicht darstellend die Anordnung der Wicklungspaare gemäß einem Ausführungsbeispiel der Erfindung;
Fig. 3a, b: Symboldarstellung und vereinfachtes Ersatzschaltbild zu Fig. 2;
Fig. 4: Transformator und die darin fließenden Ströme im Normalbetrieb;
Fig. 5: Transformator und die darin fließenden Ströme in einem Kurzschlussfall;
Fig. 6a, b: Ausführungsformen für einen Einphasentransformator gemäß der Erfindung;
Fig. 7a, b: Ausführungsformen des Transformators für Dreiphasensysteme; und
Fig. 8: einpoliges Ersatzschaltbild eines herkömmlichen Anlagentransformators.

Ein in ihrer Gesamtheit mit der Bezugsziffer 1 bezeichnete Windenergieanlage gemäß einem Ausführungsbeispiel der Erfindung umfasst eine am oberen Ende eines Turms schwenkbar angeordnete Gondel 11, an deren Stirnseite ein Windrotor 12 mit mehreren Rotorblättern 13 drehbar angeordnet ist. Der Windrotor 12 treibt über eine (nicht dargestellte) Rotorwelle einen Generator 2 an, der die vom Windrotor 12 zugeführte mechanische Leistung in elektrische Leistung umwandelt und über einen Umrichter 3 ausgibt. Die elektrische Leistung wird über Speiseleitungen 4 einem Anlagentransformator auf einem Niederspannungsniveau zugeführt. Der Anlagentransformator 6 ist dazu ausgebildet, die auf Niederspannungsniveau zugeführte elektrische Leistung auf ein Mittelspannungsniveau anzuheben und über eine Anschlussleitung 8 an ein Netz 9 abzugeben. Bei dem Netz 9 kann es sich um ein Energieübertragungsnetz oder um ein internes Netz, wie bspw. das Parknetz eines Windparks, handeln.

Für die Speiseleitung 4 ist in dem dargestellten Ausführungsbeispiel vorgesehen eine Anordnung aus zwei parallelen Zweigen, einem ersten Speiseleitungszweig 41 und einem zweiten Speiseleitungszweig 42. Sie laufen von einem gemeinsamen oder getrennten Anschluss am Umrichter 3 (optional können auch getrennte Umrichter vorgesehen sein, also je Speiseleitungszweig ein eigener Umrichter) zu Eingangsanschlüssen 43, 44 am Anlagentransformator 6.

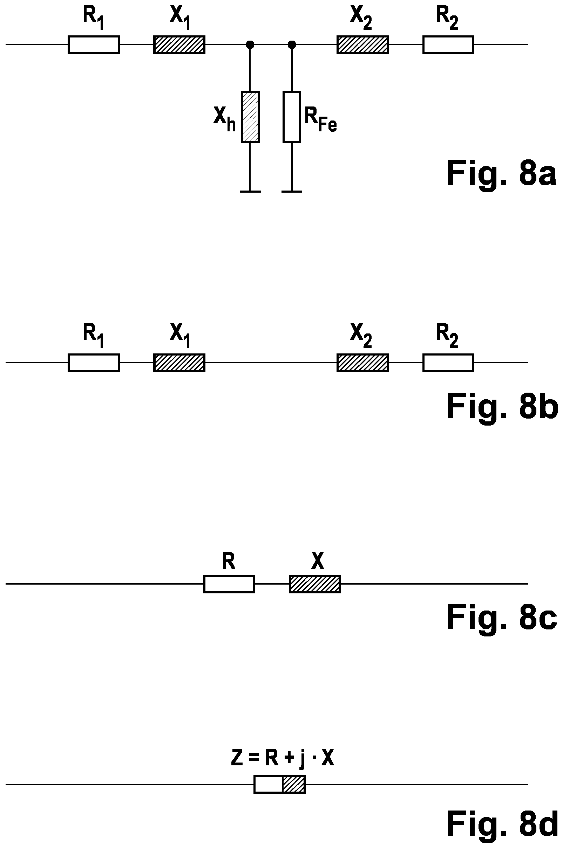

Zuerst sei auf einen herkömmlichen Anlagentransformator gemäß dem Stand der Technik in klassischer Zweiwicklungsbauweise anhand eines einpoligen Ersatzschaltbilds Bezug genommen, wie es in Fig. 8 dargestellt ist. Links ist der Anschluss für die Speiseleitung 4, und rechts ist der Anschluss für die Übertragungsleitung 8 zum Netz 9. Die beiden Wicklungen des Anlagentransformators, die Unterspannungswicklung einerseits und die Oberspannungswicklung andererseits, sind in dem Ersatzschaltbild in Fig. 8a dargestellt durch die ohmschen Widerstände R1, R2 und deren induktiven Streuwiderständen X1 und X2. Die für die Koppelung von Ein- und Ausgang maßgeblich Gegeninduktivität ist durch das Ersatzelement Xₕ dargestellt und die Eisenverluste durch ein ohmschen Widerstand R_{fe}. Durch Vereinfachung gelangt man zu dem Ersatzschaltbild gemäß Fig. 8b. Hierbei werden die Wirkung der Gegeninduktivität und des Eisenverlustwiderstands vernachlässigt. Die beiden Wicklungswiderstände R1 und R2 werden zusammengefasst, und ferner zusammengefasst werden die beiden Streuinduktivitäten X1, X2 (Fig. 8c). Man kann sie auch darstellen als Real- bzw. Imaginärkomponente einer Ersatzimpedanz Z₁₂ (s. Fig. 8d). Man gewinnt so eine vereinfachte Darstellung der Transformatorwirkung mithilfe einer komplexen Impedanz Z.

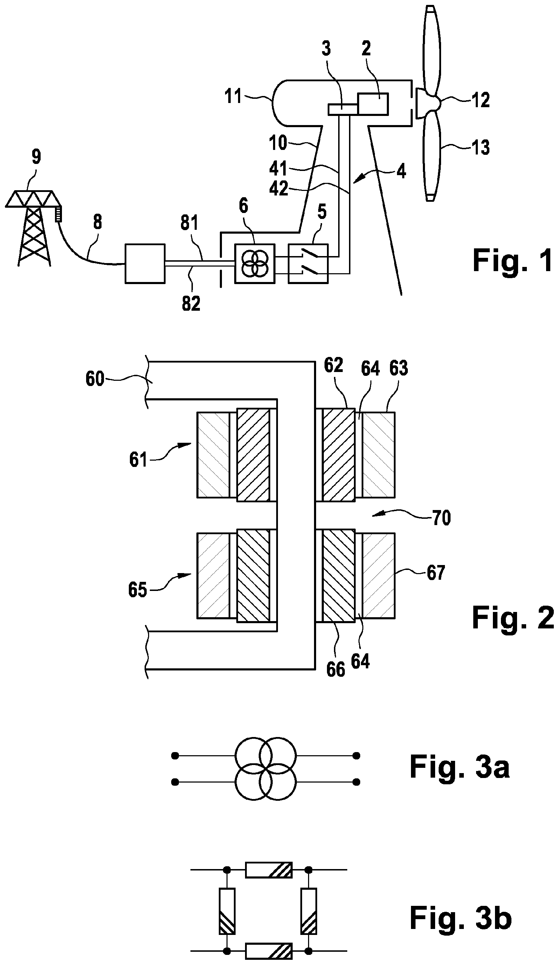

Es wird nun Bezug genommen auf Fig. 2, welche den konstruktiven Aufbau des Anlagentransformators 6 als erfindungsgemäßen Vierwicklungstransformator darstellt. Man erkennt auf einem gemeinsamen Kern 60 zwei Wicklungspaare 61, 65. Sie sind voneinander beabstandet auf demselben Kern angeordnet mit einem Freiraum 70 dazwischen. Das erste Wicklungspaar 61 weist eine auf den Kern 60 gewickelte Unterspannungswicklung 62 auf, auf die wiederum getrennt über eine Isolatorschicht 64 eine Oberspannungswicklung 63 aufgewickelt ist. Das zweite Wicklungspaar 65 ist genauso aufgebaut, mit einer auf den Kern 60 aufgewickelten Unterspannungswicklung 66, auf welche wiederum mittels einer Isolierschicht 64 eine Oberspannungswicklung 67 aufgewickelt ist. Die beiden Unterspannungswicklungen 62, 66 sind also so angeordnet, dass sie von der ihr zugeordneten Oberspannungswicklung 63 bzw. 67 umschlossen sind. Sie befinden sich damit unmittelbar im Hauptfeld der jeweiligen Oberspannungswicklung. Damit wird eine gute Koppelung erreicht, woraus eine Transformatorwirkung mit niedriger Impedanz resultiert. Dies gilt für die beiden Wicklungspaare 61 an sich und für das Wicklungspaar 65 an sich gleichermaßen.

Außer dem Hauptfeld entsteht auch ein sogenanntes Streufeld. Es reicht von dem ersten Wicklungspaar 61 bis zum zweiten Wicklungspaar 62 und erreicht sein Maximum im Bereich des Freiraums 70. Durch dieses Streufeld sind die beiden Wicklungspaare 61, 65 miteinander (schwach) gekoppelt. Da das Streufeld schwächer ist als das Hauptfeld, ist die Koppelung nur schwach, sodass sich eine höher-impedante Verbindung zwischen den Wicklungen des ersten Wicklungspaares 61 zu den Wicklungen des zweiten Wicklungspaares 65 und umgekehrt ergibt, als es zwischen den beiden Wicklungen innerhalb eines jeden Wicklungspaares 61, 65 der Fall ist.

Das elektrische Ersatzschaltbild hierzu ist in den Figuren 3a, b dargestellt. In Fig. 3a ist das elektrische Symbol dargestellt. Man erkennt zwei parallele Transformatorenstränge, jeweils einer oben horizontal und einer unten horizontal laufend. Sie stellen den Fluss innerhalb der jeweiligen Wicklungspaare 61, 65 dar. Die dadurch erreichte Transformatorwirkung ist die Hauptwirkung und ist niederimpedant. Die Koppelung der beiden parallelen Stränge ist durch das Ineinanderlaufen der Kreise dargestellt. Es ergeben sich somit auch überkreuzende Stränge, welche aber höher impedant sind. Das elektrische Ersatzschaltbild dazu mit den eingezeichneten Impedanzen ist in Fig. 3b dargestellt. Die Impedanzen Z₁₃ und Z₂₄ sind deutlich größer als die Impedanzen Z₁₂ und Z₃₄, in der Regel mindestens eine Größenordnung (mindestens 10fach).

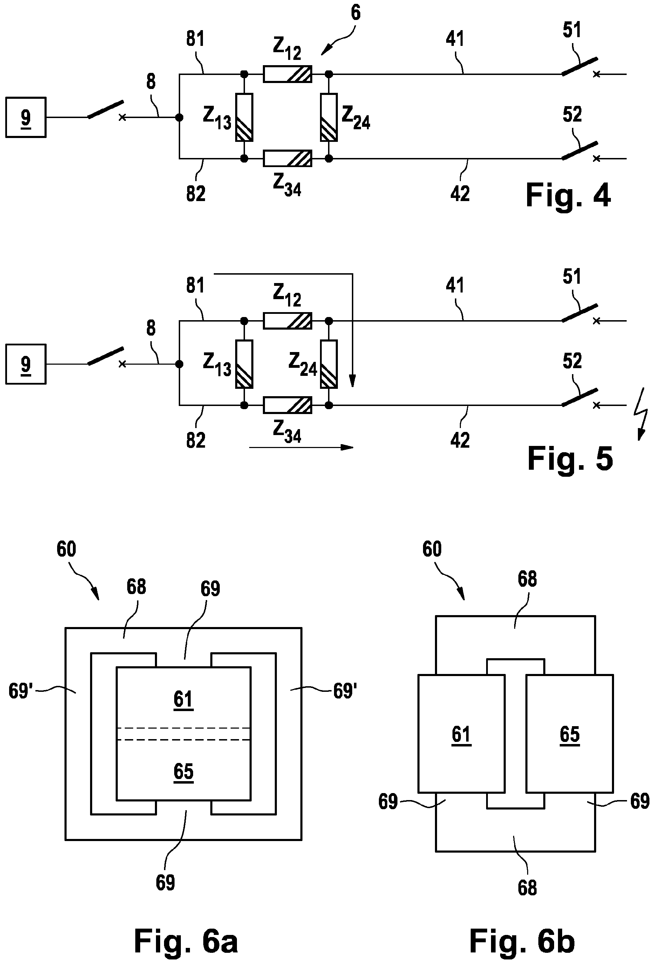

Unter Zugrundelegung des Ersatzschaltbilds gemäß Fig. 3b wird nunmehr Bezug genommen auf die Leistungsflussdarstellung, wie sie in Fig. 4 enthalten ist. Sie stellt den Normalbetrieb der Windenergieanlage dar. Der Leistungsfluss ist hierbei von rechts nach links. Die vom Umrichter 3 abgegebene Leistung wird über die Verbindungsleitung 4 mit dem Leistungsschalter 5 zu den Anschlüssen 41, 42 an dem erfindungsgemäß ausgeführten Vierwicklungstransformator 6 geführt. An dessen Ausgängen 81, 82 ist die Übertragungsleitung 8 zu dem Netz 9 angeschlossen. Im Normalbetrieb wird vom Umrichter 3 jeweils 50% des Gesamtstroms in einen der beiden Speiseleistungszweige 41, 42 eingeprägt. Es ergibt sich somit eine Stromaufteilung von zweimal 50%. Es liegen somit symmetrische Verhältnisse vor, sodass die Querimpedanzen Z₁₃ sowie Z₂₄, welche ohnehin hochimpedant sind, wirkungslos sind. Im regulären Betrieb wirken sie sich daher nicht aus, und insbesondere stören sie nicht.

In Fig. 5 ist dieselbe Darstellung enthalten, nunmehr aber für den Fall eines Kurzschlussbetriebs. Es sei angenommen, dass in dem zweiten Speiseleistungszweig 42 ein Kurzschluss (dargestellt durch ein Blitzsymbol) auftritt. Tritt nunmehr die Situation auf, dass einer der beiden Schalter 51, 52 vor dem anderen schaltet (es sei angenommen, der Schalter 51 schalte zuerst ab), so fließt der Gesamtstrom nunmehr allein durch den Schalter 52. Dieser trägt nunmehr den Gesamtstrom. Dieser Gesamtstrom setzt sich zusammen aus dem Strom, der ohnehin durch den unteren Zweig fließt über die Impedanz Z₃₄ (s. den langen Pfeil), und zusätzlich noch den Strom, welcher von dem oberen Zweig des Transformators 6 hinzugefügt wird (s. den geknickten Pfeil). Hierfür gilt folgende Beziehung: ${I}_{K} = \frac{U}{{Z}_{34}} + \frac{U}{{Z}_{12} + {Z}_{24}}$

Aufgrund der großen Impedanz im Kreuzkoppelungszweig Z₂₄ wird somit der im zweiten Term angegebene Beitrag aus dem ersten Wicklungspaar 61 deutlich verringert. Anstatt das wie im Stand der Technik der Leistungsschalter 52 den Gesamtstrom, mithin also 100% aufnehmen müsste, braucht er bei der erfindungsgemäßen Ausführung lediglich ca. 55% des Stroms aufzunehmen. Er wird damit nur geringfügig höher belastet, als es im Betrieb mit Gesamtkurzschluss der Fall ist. Damit ist eine Überlastung des Schalters auch im Kurzschlussfall sicher ausgeschlossen. In Fig. 6a, b sind weitere vorteilhafte einphasige Ausführungsformen für den erfindungsgemäßen Vierwicklungstransformator dargestellt. Bei der Ausführungsform gemäß Fig. 6a sind alle vier Wicklungen auf einen gemeinsamen Schenkel 69 aufgebracht, der außen über zwei Schmalschenkel 69' zurückgeführt ist. Die Schenkel 69, 69' sind über am Fuß und am Kopf verlaufende Joche 68 verbunden. Diese Bauform des Kerns 60 wird als Mantelbauweise bezeichnet. Eine alternative Ausführungsform ist in Fig. 6b dargestellt, die als Kernbauform bezeichnet ist. Hierbei ist der Kern 60 so ausgeführt, dass er zwei Schenkel 69 aufweist, die jeweils an Kopf und Fuß durch zwei Joche 68 verbunden sind. Auf dem linken Schenkel 69 ist das ersten Wicklungspaar 61 und auf dem rechten Schenkel 69 ist das zweite Wicklungspaar 65 angeordnet. Damit wird innerhalb der jeweiligen Wicklungspaare 61, 65 eine hervorragende Koppelung zwischen Unterspannung- und Oberspannungswicklung 62, 63 bzw. 66, 67 erreicht. Bedingt durch den größeren Abstand sind die Impedanzen Z₁₃ und Z₂₄ verhältnismäßig groß, sodass sich diese Bauform besonders gut für den erfindungsgemäßen Vierwicklungstransformator 6 eignet.

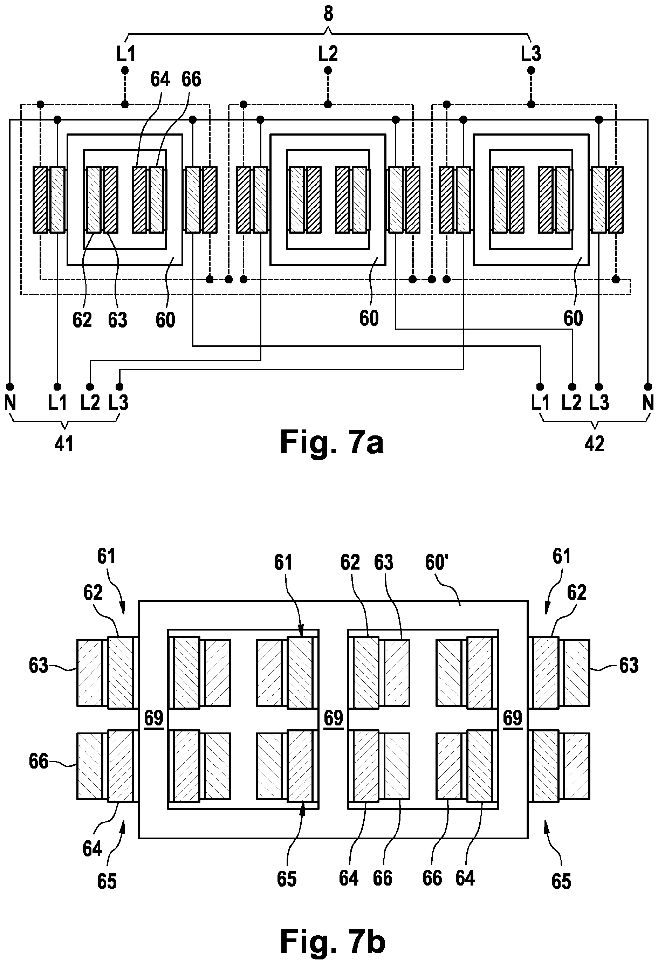

In Fig. 7a, b sind zwei Bauformen für ein Mehrphasensystem, genauer gesagt ein Drehstromsystem, dargestellt. Bei der in Fig. 7a dargestellten Ausführungsform handelt es sich um eine Kombination aus drei Einphasentransformatoren in Kernbauform, einen für jede der drei Phasen. Leitungen des Unterspannungsniveaus sind mit durchgezogener Linie, Leitungen des Oberspannungsniveaus sind mit gestrichelter Linie dargestellt. Die Speiseleitungen sind an die im Bild unten dargestellten Anschlusspunkte angeschlossen, jeweils mit drei Phasen und einem gemeinsamen Nullleiter. Im Übrigen wird auf die Erläuterung zu Fig. 6a, b Bezug genommen. In Fig. 7b ist eine Variante dargestellt mit einem Transformator in Dreiphasenbauform. Er weist einen Kern 60' mit drei Schenkeln 69 auf, auf denen jeweils zwei Wicklungspaare 61, 65 angeordnet sind (vgl. Fig. 2). Aus Übersichtsgründen sind die Speiseleitungen und Anschlusspunkte nicht dargestellt; es wird insoweit auf die Darstellung in Fig. 7a verwiesen, die sinngemäß anzuwenden ist.

## Patentansprüche

1. Windenergieanlage umfassend einen Windrotor (12), einen vom Windrotor (12) angetriebenen Generator (2) mit Umrichter (3) zur Erzeugung elektrischer Leistung, und einen über eine Verbindungsleitung (4) angeschlossenen Anlagentransformator (6) mit mindestens einem Phasenstrang zur Abgabe der Leistung in ein Netz (9), wobei der Anlagentransformator (6) ein aus Unterspannungswicklung (62) und Oberspannungswicklung (63) bestehendes Wicklungspaar (61) aufweist für jeden Phasenstrang, die eine erste Impedanz des Anlagentransformators (6) bilden,
**dadurch gekennzeichnet, dass**
für jeden Phasenstrang mindestens ein zweites Wicklungspaar (65) mit zweiter Unterspannungswicklung (66) und zweiter Oberspannungswicklung (67) vorgesehen ist, welches von dem ersten Wicklungspaar (61) beabstandet angeordnet ist, und wobei jedes der Wicklungspaare (61, 65) im Streufeld des jeweils anderen Wicklungspaars (65, 61) angeordnet ist, wobei eine magnetische Kreuzkoppelung zwischen den Wicklungen (62, 63) des einen Wicklungspaares (61) zu denen (66, 67) des anderen gebildet ist und wobei das erste und das zweite Wicklungspaar (61, 65) elektrisch parallel geschaltete Stränge für die Leistung bilden.

2. Windenergieanlage nach Anspruch 1, **dadurch gekennzeichnet, dass** die Wicklungspaare (61, 65) voneinander durch einen Zwischenraum (7) getrennt auf einem gemeinsamen Kern (60) angeordnet sind.

3. Windenergieanlage nach Anspruch 1 oder 2, **dadurch gekennzeichnet, dass** die beiden Wicklungen (62, 63, 66, 67) des Wicklungspaars (61, 65) so angeordnet, dass die eine Wicklung (62, 66) des Wicklungspaars (61, 65) umgeben ist von der anderen Wicklung (63, 67) dieses Wicklungspaars (61, 65) .

4. Windenergieanlage nach einem der vorangehenden Ansprüche, **dadurch gekennzeichnet, dass** eine Impedanz zwischen den Wicklungen verschiedener Wicklungspaare (61, 65) mindestens 3fach größer ist als die zwischen den Wicklungen innerhalb des Wicklungspaars, vorzugsweise um mindestens das 10fache.

5. Windenergieanlage nach einem der vorangehenden Ansprüche, **dadurch gekennzeichnet, dass** Leistungsschalter (5) in der Verbindungsleitung (4) vorgesehen sind, wobei die Leistungsschalter (5) leistungsmäßig kleiner dimensioniert sind als es dem Gesamt-Kurzschlussstrom des Anlagentransformators (6) entspricht.

6. Windenergieanlage nach Anspruch 5, **dadurch gekennzeichnet, dass** die Leistungsschalter (5) größer dimensioniert sind, als es dem Kurzschlussstrom eines einzelnen Wicklungspaars (61, 65) und Aufbau als getrennten Transformatoren entspricht.

7. Windenergieanlage nach einem der vorangehenden Ansprüche, **dadurch gekennzeichnet, dass** der Anlagentransformator (6) in einer Kernbauweise mit zwei durch Joche (68) verbundenen Schenkeln (69) ausgeführt ist, wobei auf den beiden Schenkeln (69) die Wicklungspaare (61, 65) einer Phase angeordnet sind.

8. Windenergieanlage nach einem der vorangehenden Ansprüche, **dadurch gekennzeichnet, dass** der Anlagentransformator (6') für ein Mehrphasensystem derart ausgebildet ist, dass er ein oder mehr getrennte Kerne (60) umfasst, wobei jeder Kern (60) die getrennten Wicklungspaare aufweist.

9. Windenergieanlage nach Anspruch 8, **dadurch gekennzeichnet, dass** Nullleiter der getrennten Wicklungspaare miteinander verbunden sind.

## Claims

1. Wind energy installation comprising a wind rotor (12), a generator (2) with a converter (3) for generating electrical power, which generator is driven by the wind rotor (12), and an installation transformer (6) which is connected via a connecting line (4) and has at least one phase winding section for delivering the power to a network (9), wherein the installation transformer (6) has a winding pair (61) consisting of a low-voltage winding (62) and a high-voltage winding (63) for each phase winding section, which winding pairs form a first impedance of the installation transformer (6),
**characterized in that**
at least one second winding pair (65) having a second low-voltage winding (66) and a second high-voltage winding (67) is provided for each phase winding section and is arranged at a distance from the first winding pair (61), and wherein each of the winding pairs (61, 65) is arranged in the stray field of the respective other winding pair (65, 61), wherein magnetic cross-coupling is formed between the windings (62, 63) of one winding pair (61) and the windings (66, 67) of the other winding pair, and wherein the first and second winding pairs (61, 65) form winding sections for the power which are electrically connected in parallel.

2. Wind energy installation according to Claim 1, **characterized in that** the winding pairs (61, 65) are arranged in a manner separated from one another by an intermediate space (7) on a common core (60).

3. Wind energy installation according to Claim 1 or 2, **characterized in that** the two windings (62, 63, 66, 67) of the winding pair (61, 65) are arranged in such a manner that one winding (62, 66) of the winding pair (61, 65) is surrounded by the other winding (63, 67) of this winding pair (61, 65).

4. Wind energy installation according to one of the preceding claims, **characterized in that** an impedance between the windings of different winding pairs (61, 65) is at least three times greater than that between the windings inside the winding pair, preferably at least 10 times greater.

5. Wind energy installation according to one of the preceding claims, **characterized in that** circuit breakers (5) are provided in the connecting line (4), wherein the circuit breakers (5) have smaller dimensions in terms of power than the total short-circuit current of the installation transformer (6).

6. Wind energy installation according to Claim 5, **characterized in that** the circuit breakers (5) have larger dimensions than the short-circuit current of an individual winding pair (61, 65) and the construction as separate transformers.

7. Wind energy installation according to one of the preceding claims, **characterized in that** the installation transformer (6) has a core design with two limbs (69) connected by means of yokes (68), wherein the winding pairs (61, 65) of a phase are arranged on the two limbs (69).

8. Wind energy installation according to one of the preceding claims, **characterized in that** the installation transformer (6') is designed for a multiphase system in such a manner that it comprises one or more separate cores (60), wherein each core (60) has the separated winding pairs.

9. Wind energy installation according to Claim 8, **characterized in that** neutral conductors of the separated winding pairs are connected to one another.

## Revendications

1. Éolienne comprenant un rotor (12) d'éolienne, un générateur (2) entraîné par le rotor (12) d'éolienne et doté d'un convertisseur (3) qui produit de l'énergie électrique, ainsi qu'un transformateur (6) d'éolienne raccordé par l'intermédiaire d'un conducteur de raccordement (4) et présentant au moins un barreau de phase qui délivre l'énergie à un réseau (9), le transformateur (6) d'éolienne présentant pour chaque barreau de phase une paire d'enroulements (61) constituée d'un enroulement de sous-tension (62) et d'un enroulement de sur-tension (63), qui forment une première impédance du transformateur (6) d'éolienne,
**caractérisée en ce que**
pour chaque barreau de phase, au moins une deuxième paire d'enroulements (65) dotée d'un deuxième enroulement de sous-tension (66) et d'un deuxième enroulement de sur-tension (67) est prévu et est disposé à distance de la première paire d'enroulements (61), chacune des paires d'enroulements (61, 65) étant disposée dans le champ de dispersion de l'autre paire d'enroulements (65, 61),
**en ce qu'**un accouplement magnétique entre les enroulements (62, 63) d'une première paire d'enroulements (61) et ceux (66, 67) de l'autre est formé et
**en ce que** la première et la deuxième paire d'enroulements (61, 65) constituent des barreaux raccordés électriquement en parallèle pour l'énergie produite.

2. Éolienne selon la revendication 1, **caractérisée en ce que** les paires d'enroulements (61, 65) sont séparées l'une de l'autre par un espace intermédiaire (7) et sont disposées sur un noyau commun (60).

3. Éolienne selon les revendications 1 ou 2, **caractérisée en ce que** les deux enroulements (62, 63, 66, 67) de la paire d'enroulements (61, 65) sont disposés de telle sorte qu'un enroulement (62, 66) de la paire d'enroulements (61, 65) est entouré par l'autre enroulement (63, 67) de cette paire d'enroulements (61, 65) .

4. Éolienne selon l'une des revendications précédentes, **caractérisée en ce qu'**une impédance entre les enroulements de différentes paires d'enroulements (61, 65) est au moins trois fois et de préférence au moins dix fois plus élevée que l'impédance entre les enroulements d'une paire d'enroulements.

5. Éolienne selon l'une des revendications précédentes, **caractérisée en ce que** des commutateurs de puissance (5) sont prévus dans le conducteur de raccordement (4), la puissance des commutateurs de puissance (5) étant dimensionnée à un niveau inférieur à ce qui correspond au courant de court-circuit global du transformateur (6) d'éolienne.

6. Éolienne selon la revendication 5, **caractérisée en ce que** les commutateurs de puissance (5) sont dimensionnés à un niveau supérieur à ce qui correspond au courant de court-circuit d'une paire d'enroulements (61, 65) et à une structure comme transformateurs séparés.

7. Éolienne selon l'une des revendications précédentes, **caractérisée en ce que** le transformateur (6) d'éolienne est réalisé sous la forme d'un noyau doté de deux branches (69) reliées par une culasse (68), les paires d'enroulements (61, 65) d'une phase étant disposées sur les deux branches (69).

8. Éolienne selon l'une des revendications précédentes, **caractérisée en ce que** le transformateur d'éolienne (6') pour un système multiphasé est configuré de manière à présenter un ou plusieurs noyaux (60) séparés, chaque noyau (60) présentant les paires d'enroulements séparées.

9. Éolienne selon la revendication 8, **caractérisée en ce que** les conducteurs neutres des paires d'enroulements séparées sont reliés les uns aux autres.
